# EUROPEAN PATENT SPECIFICATION

(11) **EP 2 627 196 B1**
(45) Date of publication and mention of the grant of the patent: **18.05.2016**
(21) Application number: 11773917.7
(22) Date of filing: 17.10.2011
(51) Int. Cl.: A23C 9/154, A23L 33/00, A23C 9/133, A23L 2/02, A23L 19/00

(54) **DAIRY BASED SMOOTHIE FOR STIMULATING GROWTH IN CHILDREN**
SMOOTHIE AUF MILCHBASIS ZUR STIMULIERUNG DES WACHSTUMS BEI KINDERN
SMOOTHIE À BASE DE PRODUITS LAITIERS POUR STIMULER LA CROISSANCE CHEZ DES ENFANTS

(30) Priority: 15.10.2010 WO PCT/NL2010/050686
(43) Date of publication of application: 21.08.2013
(73) Proprietor: N.V. Nutricia, 2712 HM Zoetermeer (NL)
(72) Inventor: GOEDHART, Anna Christina, NL-3043 PR Rotterdam (NL); GARVEY, Josephine Julia, NL-2712 HM Zoetermeer (NL); HOEBERICHTS, Vivianne Aloysia Joanna, NL-2712 HM Zoetermeer (NL); BAKKER, Rudolf Wilhelmus Maria, NL-2712 HM Zoetermeer (NL)
(74) Representative: Nederlandsch Octrooibureau
(86) International application number: PCT/NL2011/050710
(87) International publication number: WO 2012/050453

(56) References cited:
- EP-A1- 0 622 024
- DE-U1-202004 021 516
- US-A- 4 212 893
- US-A- 4 562 085
- US-B1- 6 171 633
- "Frebini sip feeds", , May 2009 (2009-05), pages 1-2, XP55013857, Retrieved from the Internet: URL:http://www.fresenius-kabi.com/files/FS _Frebini_sipfeed_ANSICHT.pdf [retrieved on 2009-05]

## Description

### FIELD OF THE INVENTION

The invention relates to a preferably dairy based, fruit containing, high energy (medical) oral nutritional composition with improved compliance indicated for children with, or at risk of, faltering growth due to malnutrition.

### BACKGROUND OF THE INVENTION

The reported prevalence of malnutrition in paediatric patients ranges from about 5% to 50%, depending on the criteria used to assess nutritional status, the diagnoses, and the age of the patients. In a recent study 24.1 % of children admitted to a large children's hospital in Germany were malnourished. The highest risk of malnutrition was found in infants and in young children below 5 years.

High risk groups include children with gastrointestinal diseases, respiratory diseases, cystic fibrosis, neurological disabilities, cardiac diseases, infectious diseases and cancer during treatment, as well as critically ill children requiring intensive care.

The nutritional status of children often deteriorates during hospitalisation. In a prospective study it was observed that 65% of children lost weight during their stay in hospital, which strongly contributed to nutritional risk. In addition, it was reported that children that were malnourished on admission, were at risk for further nutritional deterioration during their hospital stay. In all groups of children with a body mass index (BMI) z-score < -2 at admission, nutritional status declined progressively. It was also reported that 52% of children below 5 years of age admitted to a Brazilian hospital lost weight, with most weight being lost by those with prolonged hospital stays and pneumonia as the disease responsible for their hospitalization. Children who were malnourished on admission were still malnourished at hospital discharge and 9% of well-nourished children developed mild malnutrition during hospital stay.

In children, failure to meet nutritional requirements may not only result in impaired muscle function, respiratory and myocardial function, immune-deficiency, poor wound healing, gastrointestinal dysfunction and apathetic and withdrawn behavior, but will also result in growth faltering, may reduce tolerance to therapy, may increase surgical risk and delay surgical procedures, and may adversely affect organ development, and even mental and psychomotor development.

The beneficial effects of oral nutritional supplementation (ONS) in children are dependent on both the composition of the supplements and on compliance with the dietary regimen. Low compliance seems to be an important reason for the lack of effect of ONS in children (Poustie et al. BMJ 2006;332:632-6). Many factors are known to influence compliance, including patient/family factors, disease factors and treatment/product related factors, such as taste and flavour, texture, volume of the ONS, packaging and presentation, and (lack of) variety. Low compliance may necessitate the use of tube feeding, which may have negative effects of the quality of life of the children.

Many (medical) oral nutritional supplements are on the market, produced by different suppliers, but no product is available that effectively combines the inclusion of all essential nutrients with a good taste and compliance by the child. This forms a significant problem in the nutritional treatment of these children. In many cases the medical caretakers are happy if the child complies with the so called 'MacDonald's diet'. Such diet is indeed better than nothing, but far from ideal since many essential nutrients are not present in such diets.

Yoghurt compositions with added fruit can be used by healthy infants. EP0622024 describes the use of such yoghurt for feeding even in early childhood. Many other fruit containing yoghurts are known in the market. They are without exception all meant for use in healthy children and not specifically suitable for feeding sick children who may suffer from a leaky gut, and may be at increased risk of probiotic translocation through the intestinal mucosa into the blood. These safety concerns with the use of probiotics in children (risk of bacterial translocation and sepsis) are most relevant for children who are immuno-compromised, chronically debilitated, or seriously ill (Thomas et al, Pediatrics 2010;126;1217-1231, and Boyle et al, Am J Clin Nutr 2006;83:1256-64).

US 2008/254012 discloses a composition with LCPUFA and probiotics for promoting catch-up growth. The compositions are not fermented and do not have a low pH. The document also does not relate to the problem of how to improve the compliance/taste of the product.

### SUMMARY OF THE INVENTION

There is a clear need for improving the nutritional status of patients, in particular of paediatric patients. The object of the invention is to improve the compliance of oral intake of (medical) nutritional compositions by infants and children, preferably from the age of 1 year and older, with faltering growth due to disease.

In view of the need to improve the composition and compliance of intake of medical nutrition for children, the present inventors investigated the taste preferences of children in need of catch up growth due to faltering growth.

The present inventors have surprisingly found that acidic nutrition is highly preferred by most sick children regardless of their medical problem and that an acidic nutritional product improves the compliance of consuming the nutritional product. It was found to be even more preferred if the nutrition was dairy based. Consequently, the research underlying the present invention has led to the development of a new product capable of improving compliance of paediatric patients with oral nutritional compositions and therefore resulting in catch-up growth and improved nutritional status in children.

The inventors developed a medical oral nutritional composition in the form of a smoothie specifically designed for sick children. Typical for the medical oral nutrition is that it is acidic, yet that it is a compostion that is not-fermented. In particular, the composition is not a yoghurt. The nutritional composition has an energy content of at least 0.9 kcal/ml and is high in protein content. The composition comprises fruit, preferably, the composition comprises fruit in the form of a juice or puree. The composition has a low pH, in particular a pH below 5 and preferably above 3. Preferably the nutritional composition is rich in micronutrients necessary for optimal growth.

The preferred composition comprises between 8-35 % protein based on total caloric content of the composition, 15-60 % fat based on total caloric content of the composition, 35-65 % carbohydrates based on total caloric content of the composition and preferably the composition comprises dietary fiber. Preferably the protein comprises between 50-100 wt% whey preferably between 70-100 wt% or even more preferably between 80 and 100 wt% whey, based on the total protein content and the product comprises between 0.5 and 25 wt% fruit based on the total weight of the composition.

In examples 2 and 3 a smoothie composition according to the invention was tested on taste and compared with fruit flavored but no fruit containing products. Surprisingly the inventors found that a smoothie product was scored much better on overall liking than the product that did not contain real fruit. Within the medical nutrition this innovation is expected to have a great inpact on product compliance and thus efficacy in treating malnutrition and inducing catch-up growth in patients suffering from faltering growth.

The composition according to the present invention is an excellent tasting, fruit, vegetable or both fruit and vegetable containing, preferably nutritionally complete, high energy, ready-to-use, preferably multi fibre enriched oral nutrition in children's favorite flavours, and is intended for enteral nutritional support for those children with a functional or a partially functional gastrointestinal tract who are unable or unwilling to eat sufficient quantities of conventional foods to meet their nutritional requirements.

It has been designed to maximise compliance and nutrient intake by offering a healthy, child-friendly, great tasting alternative to the present compositions available for this paediatric target group.

### DETAILED DESCRIPTION OF THE INVENTION

The present invention concerns a liquid composition with an energy content of at least 0.9 kcal per ml, a pH between 3.5 and 5, said composition comprising fat, protein, digestible carbohydrates and fruit wherein
a. the protein content is at least 8 % based on total calories of the composition,
b. the fat content is between 25 and 50 % based on total calories of the composition,
c. the digestible carbohydrate content is between 35 and 65 %, based on total calories of the composition
d. the fruit is present in an amount of at least 5 wt% based on total weight of the composition.

The present inventors surprisingly found that children have a strong preference for acidic fruit based compositions. Until now, fruit based medical products for sick children do not exist in the market. The present liquid composition is not a yoghurt.

In the present invention, when it is stated that the composition comprises a certain weight percentage of fruit e.g. 5 wt% fruit, it is meant to refer to the amount of fruit in undiluted form, i.e. with the original value of degrees Brix as it would have as fresh fruit. In one embodiment, the fruit is present as a fruit preparation, preferably as a fruit puree. A fruit puree is a preparation comprising finely ground fruit. A fruit puree may contain additives, in particular preservatives such as preferably ascorbic acid and/or citric acid. Preferably the fruit preparation has a refractive index between 15 and 70 degrees Brix. Degrees Brix of the fruit preparation results from the measurement by which the percentage by weight of soluble solids (most of which are fruit solids) is determined and is expressed as a content of sucrose in a solution. This measurement at 20°C can be carried out wih a Brix hydrometer or more commonly with a refractometer calibrated to a Brix scale. Commercial fruit purees or extracts are concentrated resulting in a higher value of degrees Brix. When subsequently these concentrated fruit preparations are added to the composition according to the present invention the fruit preparation will be diluted.

A preferred embodiment of the present invention concerns a liquid composition with an energy content of at least 0.9 kcal per ml, a pH between 3.5 and 5, said composition comprising fat, protein, digestible carbohydrates and a fruit preparation wherein
a. the protein content is at least 8 % based on total calories of the composition,
b. the fat content is between 25 and 50 % based on total calories of the composition,
c. the digestible carbohydrate content is between 35 and 65 %, based on total calories of the composition
d. the fruit preparation is present in an amount of at least 5 wt% based on total weight of the composition and has a refractive index between 15 and 70 degrees Brix as an ingredient before addition to the liquid composition.

The fruit content in the fruit preparation is preferably between 10 and 30 weight %, based on a fruit preparation with a sugar content between 15 and 70 degrees Brix, preferably between 20 and 65 degrees Brix, even more preferably between 25 and 60 degrees Brix, even more preferably between 30 and 55 degrees Brix, even more preferably between 30 and 50 degrees Brix, even more preferably between 30 and 45 degrees Brix, even more preferably between 30 and 40 degrees Brix. Preferably the fruit preparation is added as a puree, fruit concentrate, or fruit juice. Also in this embodiment, the liquid composition is not a yoghurt.

The inventors performed a clinical trial which confirms that the taste is strongly improved when acidic fruit based oral nutritional compositions are used instead of medical nutritional supplements with a fruit taste, but not comprising the actual fruit as puree, fruit juice or fruit concentrate. It is expected that this improvement will result in an improved energy intake and an improvement in nutritional status in patients with faltering growth, for example with faltering growth due to malnutrition. Therefore, the products according to this invention are for the treatment and/or prevention of malnutrition in children who are unable to meet their nutritional requirements with normal foods alone. Preferably the composition according to the invention is for the improvement of nutritional status and stimulation of catch-up growth in children who are or have been ill. As explained above, there is a risk of using probiotics in children who are ill, including infants and children with faltering growth due to disease. Therefore, preferably the present composition does not contain probiotic bacteria. Probiotic bacteria or probiotics is a term known in the art and refers to live microorganisms which, when administered in adequate amounts, confer a health benefit on the host. The most common types of microorganisms used as probiotics are lactic acid bacteria and bifidobacteria. Thus, preferably the present composition does not contain lactic acid bacteria and bifidobacteria. Probiotics are commonly consumed as part of fermented foods such as yoghurt. As mentioned before, the present composition is not a yoghurt., but also or alternatively the composition does not contain probiotics.

### Fruit

In a preferred embodiment the composition comprises at least 5 wt%, preferably at least 10 wt% of the fruit preparation based on total weight of the liquid composition, but preferably not more than 30 wt%, preferably not more than 25 wt% of the fruit preparation based on total weight of the liquid composition. In one embodiment, the fruit preparation is present in an amount between 10 and 25 wt% based on total weight of the composition. Preferably the present composition comprises about 15 wt%, based on total weight of the liquid composition, of the fruit preparation with a Brix degree between 30 and 40, preferably the present composition comprises about 15 wt%, based on total weight of the liquid composition, of the fruit preparation with a Brix degree between 31 and 38, preferably the present composition comprises about 15 wt%, based on total weight of the liquid composition, of the fruit preparation with a Brix degree between 32 and 35. Preferably the liquid composition further comprises a vegetable preparation. Preferably the vegetable preparation is in the form of vegetable puree or vegetable extract. The vegetable preparation helps the acceptance of the composition and thus helps compliance of ingesting it. Preferably the vegetable preparation improves the appearance of the composition which helps acceptance and thus compliance. Preferably the vegetable preparation comprises carrot, e.g. carrot puree or carrot extract or carrot juice concentrate. For example a summer fruit variety liquid composition according to the invention comprises a fruit preparation comprising banana puree (preferably 23.4 wt% based on total fruit preparation), apricot puree (preferably 23.4 wt% based on total fruit preparation), pear puree (preferably 23.4 wt% based on total fruit preparation), apple puree (preferably 23.4 wt% based on total fruit preparation), and lemon juice from concentrate (preferably 6.4 wt% based on total fruit preparation). Preferably the summer fruit variety liquid composition also contains about 1 g/100 ml carrot extract. Likewise, a berry fruit variety liquid composition according to the invention comprises a fruit preparation comprising strawberry puree (preferably 23.4 wt% based on total fruit preparation), raspberry puree (preferably 23.4 wt% based on total fruit preparation), pear puree (preferably 23.4 wt% based on total fruit preparation), apple puree (preferably 23.4 wt% based on total fruit preparation), and lemon juice from concentrate (preferably 6.4 wt% based on total fruit preparation). Preferably the berry fruit variety liquid composition also contains about 1 g/100 ml carrot extract. The berry fruit variety also preferably contains about 0.6 g/100 ml of concentrated red carrot juice.

### Dietary fiber

Many children, particularly those with neurological disorders who are often on long term feeds, suffer from constipation. This is a complex problem and is both distressing to the child and the family involved. For adequate feeding of paediatric patients it is very important to solve the constipation problem in order to improve compliance of the diet. Therefore the present composition according to the invention preferably the composition comprises added dietary fiber and these added dietary fibers are in addition to the fibers that come with the fruit and/or vegetable ingredients. Preferably the dietary fibers of the composition comprise a mixture of soluble and insoluble fibers.

The preferred definition of dietary fibre from a nutritional point of view is based on non-digestibility of carbohydrates, e.g. oligosaccharides and polysaccharides, in the small intestine. Thus, dietary fibres refers to non-digestible carbohydrates meaning they are resistant to digestion and absorption in the human small intestine and enter the colon intact. So, compounds like lactose, maltose, glucose, standard maltodextrin and standard starch are regarded as digestible carbohydrates. The non-digestible carbohydrates reach the colon where they will be completely or partly fermented by the microbiota and/or partly excreted in the stools. This definition includes non-starch polysaccharides, inulin, fructo-oligosaccharides, resistant starch, preferably soluble resitant starch and lignin. The term "fermentable" as used herein refers to the capability to undergo (anaerobic) breakdown by micro-organisms in the lower part of the gastrointestinal tract (e.g. colon) to smaller molecules, in particular short chain fatty acids and lactate. The fermentability may be determined by the method described in Am. J. Clin. Nutr. 53, 1418-1424 (1991). The term "soluble" as used herein, when having reference to a non-digestible carbohydrate, means that the substance is water soluble according to the method described by L. Prosky et al., J. Assoc. Off. Anal. Chem. 71, 1017-1023 (1988).

A preferred fibre mix according to the present invention comprises fibres with a range of solubility and fermentability. This mix helps achieve a balance between production of short chain fatty acids (SCFAs) along the length of the colon and providing stool bulking properties. The fibre sources selected closely reflect the range and type of fibre habitually consumed in the normal diet and preferably include but are not limited to arabic gum, oligofructose, inulin, soy polysaccharide, resistant starch and cellulose. These fibers are particularly suitable for the treatment of constipation, i.e. reducing the number of constipation days and laxative requirements.

In a preferred embodiment the composition according to the present invention comprises between 0.5 and 1.8 g/100 ml, preferably between 0.6 and 1.2 g and even more preferably between 0.7 and 1.0 g/100 ml, or between 0.2 and 1.2 g/100 kcal, preferably between 0.3 and 1.1 g/100 kcal and even more preferably between 0.4 and 1.0 g/100 kcal of the preferred dietary fiber mixture comprising arabic gum, oligofructose, inulin, soy polysaccharide, resistant starch and cellulose.

### Fat

Fat is a concentrated form of energy that contributes little to formula osmolality. It carries fat soluble vitamins and is a source of essential fatty acids. Preferably fat is present between 30 and 50 % of the total energy of the liquid composition.

The source of fat preferably is a blend of vegetable oils (a canola-sunflower oil blend), plus small amounts of milk fat and mono- and diglycerides of fatty acids which provide percentages of saturated, polyunsaturated and monounsaturated fatty acids which are in line with current recommendations for healthy populations (Dept. of Health, 1991; BNF, 1992). Both of the essential fatty acids, linoleic acid (C18:2 (n-6)) and alpha-linolenic acid (C18:3 (n-3)) are present in amounts which are in line with current recommendations (3 to 10% and 0.5 to 4.5% of total energy respectively) (BNF, 1992). The ratio of n-6 to n-3 fatty acids preferably ranges from 10:1 -2:1, more preferably is about 5.0 : 1.

### Digestible carbohydrate

Preferably the carbohydrate content is between 15 and 25 g/100 ml or between 35-65 %, preferably between 40 and 60 and even more preferably between 45 and 55 % based on total caloric content of the composition.

The main sources of digestible carbohydrates in the present liquid composition are maltodextrin, sucrose and mono- and disaccharides from fruit and vegetable. The use of maltodextrin enhances solubility and reduces contribution to the osmolality of the formula. Preferably lactose is present in less than 0.025 g/100 ml. This amount of lactose is considered sufficiently low not to induce any clinical symptoms in those children with lactose intolerance.

The caloric contribution of the different All calculations of calories of the composition are based on the caloric contribution of digestible carbohydrates and protein of 4 kcal/g, fat of 9 kcal/g and dietary fiber of 2 kcal/g.

### Protein

Protein is important for catch up growth in infants suffering from faltering growth. Protein is required for the maintenance of the body cell mass and for virtually all major bodily functions. Protein in the diet serves as a source of essential amino acids and provides nitrogen for the synthesis of other amino acids and nitrogen-containing compounds of physiological importance. Preferably the caloric content of protein of the composition is at least 8 %, more preferably between 8 and 15 % and even more preferably between 8.5 and 12 %. Alternatively the protein content is preferably between 1 and 5 g/100 ml, more preferably between 2.0 and 4 g/100 ml. Preferably oral nutritional compositions are adapted for children because adult formulas often contain too much protein.

Preferably the protein comprises at least 50 wt% whey protein based on the total protein content, even more preferably at least 60 wt% and even more preferably at least 80 wt%. The protein may by enriched by adding amino acids preferably selected from the group consisting of leucine, citrulline, arginine, and glycine. These amino acids have additional benefits for the paediatric patients in need of catch-up growth. In determing the caloric content, also the free amino acids are taken into account. Preferably in one embodiment the protein comprises between 50-100 wt% whey, based on the total protein content.

In another preferred embodiment the protein comprises free amino acids, glycomacropeptide (GMP) or a combination thereof. Several metabolic diseases require chronically feeding of protein preparation wherein at least one amino acid is depleted. The best known example is phenyl ketone urea (PKU) wherein the intake of phenylalanine (Phe) should be as low as possible. Since fruit is generally low in protein the combination with free amino acids will be nutritionally acceptable. Glycomacropeptide is a casein protein that is very low in phenylalanine and therefore suitable for use by patients suffering from PKU. When using glycomacropeptide lower amounts of free amino acids are possible in the product which has a positive impact on the taste of the final product.

A preferred embodiment therefore is a smoothie according to the invention wherein the protein comprises glycomacropeptide (GMP) optionally with added free amino acids, preferably wherein the protein comprises more than 90wt% glycomacro peptide, or free amino acids or a mixture of free amino acids and glycomacropeptide based on the total protein content. In determining the caloric content, also the free amino acids are taken into account Preferably in one embodiment the protein comprises between 90-100 wt% free amino acids or glycomacropeptide (GMP) or a mixture of free amino acids and glycomacropeptide, based on the total protein content.

Glycomacropeptide (GMP) is a casein-derived whey peptide. This peptide is released by rennet during the manufacture of cheese or rennet casein. This product is sometimes also called caseinmacropeptide (CMP) and also caseinoglycomacropeptide (CGMP).

Patients with a metabolic disease daily have to comply with such very rigid diet. This often causes problems due to the bad taste of the free amino acids. An amino acid-based product according to the invention is thus extremely important for these patients to increase the compliance to the diet.

### Osmolality

It is often thought that hypertonic formulas may cause or worsen gastric retention, abdominal distension, nausea, vomiting, reflux, and diarrhea. A correct osmolality is therefore important. The preferred osmolality of the composition according to the invention is in the range of 600-1200 mOsm/kg water, preferably between 700 and 1100 and even more preferably between 800 and 1000 mOsm/kg water.

### Viscosity

In the context of the present invention liquid composition means that the nutritional composition can be poured. The present composition is a liquid. Preferably the present composition is a ready-to-feed composition. Preferably the composition is administered orally, preferably via a straw, or via a tube. Suitably, the composition is in a powdered form, which can be reconstituted with water to form a liquid, or in a liquid concentrate form, which should be diluted with water.

Preferably the liquid composition is characterised by its viscosity. Preferably the viscosity of the present liquid composition is between 5-300 mPa.s, more preferably between 50-200 mPa.s, more preferably between 70-150 mPa.s, more preferably between 75-140 mPa.s, more preferably between 80 - 130 mPa.s, more preferably between 85 - 120 mPa.s, more preferably between 90 - 110 mPa.s, measured at shear rate of 100 s⁻¹ at 20 °C, for example using the AR 2000 EX by TA-instruments.

### Recommended intake

The energy content of the composition is at least 0.9 kcal per ml, preferably between 0.9 and 2.2 kcal per ml, and even more preferably between 1.0 and 2.0 kcal per ml and most preferably between 1.2 and 1.8 kcal per ml.

The volume of the composition according to the present invention to be ingested by a child preferably is prescribed by a physician or dietitian and may vary from child to child according to individual needs.

As a sole source of nutrition a minimum of 800 - 1200 ml per day (depending on age) will meet the requirements of most children. Adequate liquids should be provided to meet fluid requirements.

As a supplement 200 - 600 ml per day can be given.

It is known that the addition of fish oil to increase the content of anti-inflammatory EPA and/or of specific free amino acids often significantly impairs the taste of a product. The inventors of the present invention have now surprisingly found that these ingredients can be added to an acidic drink, which preferably is slightly thickened, without having such bad effect on the taste. Without being bound by theory it is considered that low pH changes the taste perception of ingredients present in the composition. A further improvement of the taste, or masking of bad taste, seems likely to may result by the presence of dietary soluble fibers that also have a thickening effect that cover the taste buds on the tongue of the consumer. It appears now that the combination of low pH and the presence of fibers is specifically capable of camouflaging the bad taste associated with the use of e.g. fish oil.

### pH range

The pH of the present liquid composition preferably is between 3.5 and 5. A preferred embodiment according to this invention comprises a specific buffer system for obtaining the required pH range between 3.5 and 5. The preferred buffer systems comprise a mixture of a weak acid, preferably citric acid, and a strong acid, preferably disodium hydrogen phosphate. This combination of a strong and a weak acid has the advantage over a weak acid alone that less of the weak acid is needed for decreasing the pH in the range of 3.5 to 5, resulting a better taste and less salt in the final product.

### Micronutrients

As medical nutritional compositions for adults may contain for example too much sodium, potassium, chloride and magnesium, and an inappropriate vitamin and trace element profile to meet, it is preferred that the present liquid composition comprises micronutrients, e.g. vitamins, trace elements and minerals, in amounts that are adapted to the needs of children. Suitable amounts are usually prescribed by regulatory bodies and are known to the skilled person.

### Process

The invention also concerns a process for the preparation of a composition according to the invention. Basically the process comprises emulsifying a solution of protein and carbohydrates in water with fat. Then the fruit or a fruit preparation as described herein are added and the pH is adjusted to the desired value.

Thus the invention concerns a method for preparing a liquid composition with an energy content of at least 0.9 kcal per ml, a pH between 3.5 and 5, said composition comprising fat, protein, digestible carbohydrates and a fruit preparation comprising the steps of
a adding to water the carbohydrates and the protein
b emulsifying the composition obtained under a with fat
c adding a fruit preparation having a value between 15 and 70 degrees Brix, and
d adjusting the pH to a value between 3.5 and 5.

Also the invention concerns a composition obtainable by the method according to the invention.

### Application

### Nutritional support in paediatric patients

Nutritional support is indicated when energy and nutrient requirements cannot be met by regular food intake in a child with at least a partially functional gut. Furthermore, nutritional support can be used as treatment for a disease (e.g. Crohn's disease). Suggested criteria for nutritional support in paediatric patients are the following:
A. Insufficient oral intake
   - inability to meet ≥60% to 80% of individual requirements for more than 10 days;
   - in children > 1 year, nutrition support should be initiated within 5 days, and in a child < 1 year within 3 days of the anticipated lack of oral intake;
   - total feeding time in a disabled child > 4 to 6 hours per day.
B. Wasting and stunting
   - inadequate growth or weight gain for > 1 months in a child < 2 years;
   - weight loss or no weight gain for a period > 3 months in a child > 2 years;
   - change in weight/age over 2 growth channels on the growth charts;
   - triceps skinfolds consistently < 5th percentile for age;
   - fall in height velocity > 0.3 SD/year;
   - decrease in height velocity > 2 cm from the preceding year during early/mid puberty

The liquid composition according to the present invention can be used for nutritional support in paediatric patients, with the objectives to provide adequate amounts of energy and nutrients for optimal growth and development; to preserve lean tissue mass and body composition; to minimize gastrointestinal symptoms; and to support developmentally appropriate feeding behavior, and for enhancing quality of life.

### Filtering growth

Growth faltering, or failure to thrive, describes the problem of inadequate growth in early childhood. Children with faltering growth do not achieve a normal or expected rate of growth. Faltering growth is a common paediatric problem with many untoward effects. Recent studies show that children who failed to thrive in infancy are lighter and shorter at school age with adverse intellectual outcomes. Treatment of faltering growth in the context of the invention means administering a suitable composition that will result in catch-up (increased) growth of the infant.

Catch-up growth is defined as an acceleration of the growth rate following a period of growth retardation. Stimulating catch-up growth after a period of faltering growth is different from simply providing nutrition to a sick infant as indicated by the following references.
1. The paper by Clarke et al. on Randomized comparison of a nutrient-dense formula with an energy-supplemented formula for infants with faltering growth in J Hum Nutr Diet, (2007) 20, pp. 329-339, shows that a proper induction of catch-up growth requires a specific nutritional composition. Simply increasing the energy content is not sufficient.
2. A report of a joint FAO/WHO/UNU consultation on Protein and amino acid requirements in human nutrition (WHO/FAO/UNU joint expert consultation. Protein and amino acid requirements in human nutrition. 2007. World Health Organ Tech Rep Ser 2007; (935): 1-265). In this report also the terms 'catch-up growth' in (wasted) infants is used to distinguish a specific subgroup requiring certain protein energy ranges for inducing catch-up growth.
3. The review by King and Davis on Nutritional treatment of infants and children with faltering growth in EJCN (2010) 64, S11-S13, , discloses that this sub-group of infants has specific nutritional requirements for inducing catch-up growth.
4. The complete European Journal of Clinical Nutrition issue, volume 64, issue S1 of May 2010 which is entirely dedicated to catch up growth in infants suffering from faltering growth.

It is also important to accept that catch-up growth is different from normal growth in sick children. In childhood, growth is the normal state, and a slowing of the rate of growth will result in a progressive falling away from the normal growth channel with time. As growth is canalized, a return to the original growth channel requires acceleration in the rate of growth.

Thus altogether it can be recognized that faltering growth is a medical condition of its own and that children requiring catch-up growth after suffering from faltering growth due to illness are a separate patient population that require a specifically adapted treatment such as the compositions according to the present invention.

In particular faltering growth is very common in patients with a inborn errors of amino acid metabolism such as phenylketonurea (PKU), maple syrup urine disease, glutaric acidemia type 1. The composition according to the invention is suitable for use in the nutritional management of phenylketonurea (PKU), maple syrup urine disease and glutaric acidemia type 1.

### Indications for oral nutritional supplementation

In one embodiment the present invention concerns a liquid composition for use in the treatment of faltering growth in a child, comprising administering a composition according to the present invention to said child.

The invention can also be worded as the use of fat, protein, digestible carbohydrates and a fruit preparation for the manufacture of a liquid composition according to the present invention, for the treatment of faltering growth in a child. The invention can also be worded as a liquid composition according to the present invention for use in the treatment of faltering growth in a child.

In one embodiment the present invention concerns a liquid composition for use in improving the nutritional status of a child in need thereof, comprising administering a composition according to the present invention to said child. The invention can also be worded as the use of fat, protein, digestible carbohydrates and a fruit preparation for the manufacture of a liquid composition according to the present invention for improving the nutritional status of a child in need thereof. The invention can also be worded as a liquid composition according to the present invention for use in improving the nutritional status of a child in need thereof.

In one embodiment the present invention concerns a liquid composition for use in the dietary management of faltering growth in a child, comprising administering a composition according to the present invention to said child. The invention can also be worded as the use of fat, protein, digestible carbohydrates and a fruit preparation for the manufacture of a liquid composition according to the present invention for the dietary management of faltering growth in a child. The invention can also be worded as a liquid composition according to the present invention for use in the dietary management of faltering growth in a child.

The liquid composition according to the present invention is preferably used for the prevention of, treatment of and/or the nutritional management of faltering growth in patients, preferably paediatric patients suffering from
- phenylketonurea (PKU), maple syrup urine disease and/or glutaric acidemia type 1
- chronic disease, e.g. cardiac and/or pulmonary cachexia, hepatic disease, HIV/AIDS, cancer cachexia and effects of cancer therapy
- respiratory impairment (breathing difficulties) associated with respiratory and cardiac disorders
- poor appetite due to metabolic stress, e.g. trauma, minor burns
- neurologic disease or injury
- mental/physical handicap, e.g. cerebral palsy
- psychosocial disorders
- liver disease
- cystic fibrosis
- congenital heart disease
- trauma
- burns
- oro-facial malformations
- facial/jaw injuries
- dentition and swallowing disorders
- partial obstruction of the upper GI tract, e.g. oesophageal stricture
- incomplete or chronic gastrointestinal obstruction
- pancreatic/enzyme insufficiency, e.g. cystic fibrosis
- inflammatory bowel disease
- radiation enteritis and chemotherapy
- short bowel syndrome
- non-organic failure to thrive

In another embodiment according to the invention the liquid composition according to the present invention is preferably used for pre-operative feeding of malnourished patients.

### EXAMPLES

### Example 1: Process for preparing a liquid composition in the form of a smoothie

A smoothie was prepared by adding to cool water: sugar, pectin and minerals, protein was added and dietary fibers (MF6® fiber blend), maltodextrin and vitamins were added. The mixture was emulsified with oil, carrot concentrate and flavours were added. The fruit preparation as a blend of fruit purees was added, lemon juice concentrate was added and water was added to the desired volume and the pH was.

Then the composition was UHT sterilized and the finished product was filled in 200ml bottles.

### Example 2: Liquid composition in the form of a smoothie

A summer fuit smoothie that contains 15 wt% fruit, based on fresh fruit containing banana, apricot, apple and pear and lemon juice concentrate and 1 wt% carrot extract was prepared. The viscosity of this smoothie was between 70 and 150 mPa/s, measured at 20 degrees Celsius with a rotor speed 1/100 per second.

In the same manner a berry fruit smoothie that contains 15 wt% fruit, based on fresh fruit containing strawberry, raspberry, apple and pear and lemon juice concentrate and 1 wt% carrot extract, and 0.6 wt% concentrated red carrot juice was prepared. The viscosity of this smoothie was between 70 and 150 mPa/s, measured at 20 degrees Celsius with a rotor speed 1/100 per second.

**Macronutrients**

| **Nutrient** | **Unit** | **Per 100 kcal** | **Per 100 ml** |
|---|---|---|---|
| Energy | Kcal | 100 | 150 |
| Protein | g | 2.3 | 3.4 |
| | En% | 9.1 | 9.1 |
| Carbohydrate | g | 12.6 | 19.0. |
| | En% | 50.7 | 50.7 |
| Fat | g | 4.3 | 6.4 |
| | En% | 38.4 | 38.4 |
| Fibre | g | 0.93 | 1.4 |
| Osmolality summer fruit smoothie | mOsmol/kg | 930 | 930 |
| Osmolality berry fruit smoothie | mOsmol/kg | 900 | 900 |

| | | | |
|---|---|---|---|
| En% stands tor energy percentage and represents the contribution in calories based on total calories of the composition. | | | |

**Micronutrients**

| **Nutrient** | **Unit** | **per/100 kcal** | **Per /100 ml** |
|---|---|---|---|
| Na | mg | 47 | 70 |
| K | mg | 97 | 145 |
| Cl | mg | 67 | 100 |
| Ca | mg | 56 | 84 |
| P | mg | 50 | 75 |
| Mg | mg | 10 | 15 |
| Fe | mg | 0.66 | 1.0 |
| Zn | mg | 0.66 | 1.0 |
| Cu | ug | 75 | 113 |
| Mn | mg | 0.13 | 0.19 |
| F | mg | 0.07 | 0.10 |
| Mo | ug | 4.0 | 6.0 |
| Se | ug | 3.0 | 4.5 |
| Cr | ug | 2.7 | 4.0 |
| I | ug | 10 | 15 |
| VitA | ug RE | 41 | 61 |
| Carotenoids | mg | 0.10 | 0.15 |
| VitD | ug | 1.0 | 1.5 |
| VitE | mgαTE | 1.0 | 1.5 |
| VitK | ug | 4.0 | 6.0 |
| Thiamin | mg | 0.15 | 0.23 |
| Riboflavin | mg | 0.16 | 0.24 |
| Niacin | mgNE | 1.1 | 1.65 |
| Pant. Acid | mg | 0.33 | 0.50 |
| Vit B6 | mg | 0.12 | 0.18 |
| Folic acid | ug | 15 | 23 |
| Vit B12 | ug | 0.17 | 0.26 |
| Biotin | ug | 4.0 | 6.0 |
| Vit C | mg | 10 | 15 |
| Choline | mg | 20 | 30 |
| Carnitine | mg | 2.0 | 3.0 |
| Taurine | mg | 7.6 | 11.4 |

### Example 2: Taste test of the product on 7 point Likert scale in 77 kids aged between 3-7 and 8-12 years

A taste test was performed and was scored on a on 7 point Likert scale.

The results on the 7 point Likert scale were:

| | Likert score |
|---|---|
| Age 3-7 | 5.4 ± 0.15 |
| Age 8-12 | 5.2 ± 0.15 |

The taste of all the smoothies was very well appreciated by the children in both age groups (mean score between a 5.0 and a 5.5 on a 7-point Likert scale.

The Top-3 box was extremely high compared to current medical nutrition which is normally below 5. The Bottom-3 box was between 13%-20%, which means that very few children disliked the smoothies. The results show that the acidic fruit containing smoothies are very good products for improving the compliance and thus for the nutritional treatment of faltering growth and the induction of catch-up growth in children suffering from faltering growth.

### Example 3. Taste comparison of acidic fruit containing smoothie with similar non-acidic fruit (strawberry) flavored enteral medical products.

In a trial 192 children age 5-12 were tested. Half of these children received products with fruit-taste and the other half received vanilla flavored products. The infants tasted the products and a questionnaire was filled in with respect to
- liking of appearance
- liking of aroma
- liking of taste (overall) HERE
- liking of mouthfeel

The overall liking was scored between 1 and 7: 1. Really bad, 2. Bad, 3. Just a little bad, 4. Maybe good/maybe bad, 5. Just a little good, 6. Good, 7. Really good. In the table below the percentage of children that gave an overall score in the top-3 box (score 5-7) and the bottom-3 box (score 1-3) is shown.

| **Product** | **Flavour** | **energy content (kcal/100ml)** | **proteins** | **fats** | **carbohydrates** | **fibres** |
|---|---|---|---|---|---|---|
| Minnie MF | Strawberry | 100 | 2,4 | 4,5 | 11,8 | 1,5 |
| Fortini Drink 1,5 kcal MF | Strawberry | 150 | 3,4 | 6,8 | 18,8 | 1,5 |
| Frebini 1.5 | Strawberry | 150 | 3,8 | 6,7 | 18,7 | 0 |
| PediaSure 1.0 kcal | Strawberry | 101 | 2,8 | 5 | 11,2 | 0 |
| Fruit Smoothie (test product) | Red fruit | 150 | 3,4 | 6,4 | 19 | 1,4 |

| | **Minnie MF** | **Fortini Drink 1.5 Kcal** | **Frebini 1.5** | **Paediasure 1.0 kcal** | **Fruit Smoothie (test product)** |
|---|---|---|---|---|---|
| **Top-3-box** | 4,2% | 37,5% | 44,8% | 13,5% | 60,4% |
| **Bottom-3-box** | 82,3% | 57,3% | 50,0% | 67,7% | 28,1% |

As can be clearly seen from these results the fruit smoothie test product has the best scores on overall liking in the tested children. This surprisingly positive result indicates that the acid fruit containing test product was liked much better than the commercial comparative products.

## Claims

1. A liquid composition with an energy content of at least 0.9 kcal per ml, a pH between 3.5 and 5, said composition comprising fat, protein, digestible carbohydrates and fruit wherein
a. the protein content is at least 8 % based on total calories of the composition,
b. the fat content is between 25 and 50 % based on total calories of the composition,
c. the carbohydrate content is between 35 and 65 % based on total calories of the composition,
d. the fruit is present in an amount of at least 5 wt% based on total weight of the composition,
and wherein the composition is not a yoghurt.

2. A liquid composition with an energy content of at least 0.9 kcal per ml, a pH between 3.5 and 5, said composition comprising fat, protein, digestible carbohydrates and a fruit preparation wherein
a. the protein content is at least 8 % based on total calories of the composition,
b. the fat content is between 25 and 50 % based on total calories of the composition,
c. the digestible carbohydrate content is between 35 and 65 %, based on total calories of the composition
d. the fruit preparation is present in an amount of at least 5 wt% based on total weight of the composition and has a refractive index between 15 and 70 degrees Brix, measured at 20 °C using a refractometer calibrated to a Brix scale, as an ingredient before addition to the liquid composition
and wherein the composition is not a yoghurt.

3. The composition according to claim 1 or 2, wherein the fruit or fruit preparation is present in an amount between 10 and 25 wt% based on total weight of the composition.

4. The composition according to any one of the previous claims wherein the energy content is between 1 and 2 kcal per ml.

5. The composition according to any one of the previous claims, wherein the composition further comprises dietary fiber.

6. The composition according to any one of the previous claims comprising between 8-15 % protein based on total caloric content of the composition, 30-50 % fat based on total caloric content of the composition, 35-65 % digestible carbohydrates based on total caloric content of the composition.

7. The composition according to any one of the previous claims wherein the protein comprises between 50-100 wt% whey based on the total protein content.

8. The composition according to any one of claims 1-6 wherein the protein comprises free amino acids, or glycomacropeptide, or a mixture of free amino acids and glycomacropeptide.

9. The composition according to claim 8 wherein the protein comprises between 90-100 wt% free amino acids or glycomacropeptide, or a mixture of free amino acids and glycomacropeptide, based on the total protein content.

10. The composition according to any of the previous claims for use in the treatment of faltering growth in children.

11. Use of fat, protein, digestible carbohydrates and fruit or a fruit preparation for the manufacture of a liquid composition (a) for improving the nutritional status of a child in need thereof and/or (b) for the dietary management of faltering growth in a child, wherein said liquid composition has an energy content of at least 0.9 kcal per ml, a pH between 3.5 and 5, and wherein the composition is not a yoghurt, and wherein
a. the protein content is at least 8 % based on total calories of the composition,
b. the fat content is between 25 and 50 % based on total calories of the composition,
c. the carbohydrate content is between 35 and 65 % based on total calories of the composition,
d. i) the fruit is present in an amount of at least 5 wt% based on total weight of the composition or ii) the fruit preparation is present in an amount of at least 0.5 wt% based on total weight of the composition and has a refractive index between 15 and 70 degrees Brix, measured at 20 °C using a refractometer calibrated to a Brix scale, as an ingredient before addition to the liquid composition.

12. A method for preparing a liquid composition according to claim 2 comprising the steps of
a. adding to water the carbohydrates and the protein
b. emulsifying the composition obtained under a with fat
c. adding a fruit preparation having a value between 15 and 70 degrees Brix, and
d. adjusting the pH to a value between 3.5 and 5.

13. The composition according to any one of claims 1-10 or the use according to claim 11 or 12, wherein the protein content is between 8.5 and 12 % based on total calories of the composition.

14. The composition according any one any of claims 1-10 or 13, or the use according to claim 11 or 12, wherein the carbohydrate content is between 45 and 55 % based on total calories of the composition.

## Patentansprüche

1. Flüssige Zusammensetzung mit einem Energiegehalt von wenigstens 0,9 kcal pro ml, einem pH-Wert zwischen 3,5 und 5, wobei die Zusammensetzung Fett, Eiweiß, verdauliche Kohlenhydrate und Obst umfasst, wobei
a. der Eiweißgehalt, bezogen auf die Gesamtkalorien der Zusammensetzung, wenigstens 8 % beträgt,
b. der Fettgehalt, bezogen auf die Gesamtkalorien der Zusammensetzung, zwischen 25 und 50 % liegt,
c. der Kohlenhydratgehalt, bezogen auf die Gesamtkalorien der Zusammensetzung, zwischen 35 und 65 % liegt,
d. das Obst, bezogen auf das Gesamtgewicht der Zusammensetzung, in einer Menge von wenigstens 5 Gew.-% vorhanden ist
und wobei die Zusammensetzung kein Joghurt ist.

2. Flüssige Zusammensetzung mit einem Energiegehalt von wenigstens 0,9 kcal pro ml, einem pH-Wert zwischen 3,5 und 5, wobei die Zusammensetzung Fett, Eiweiß, verdauliche Kohlenhydrate und eine Fruchtzubereitung umfasst, wobei
a. der Eiweißgehalt, bezogen auf die Gesamtkalorien der Zusammensetzung, wenigstens 8 % beträgt,
b. der Fettgehalt, bezogen auf die Gesamtkalorien der Zusammensetzung, zwischen 25 und 50 % liegt,
c. der Gehalt an verdaulichen Kohlenhydraten, bezogen auf die Gesamtkalorien der Zusammensetzung, zwischen 35 und 65 % liegt,
d. die Fruchtzubereitung, bezogen auf das Gesamtgewicht der Zusammensetzung, in einer Menge von wenigstens 5 Gew.-% vorhanden ist und als eine Zutat vor der Zugabe zu der flüssigen Zusammensetzung einen Brechungsindex zwischen 15 und 70 Grad Brix aufweist, gemessen bei 20°C unter Verwendung eines auf eine Brix-Skala kalibrierten Refraktometers,
und wobei die Zusammensetzung kein Joghurt ist.

3. Zusammensetzung nach Anspruch 1 oder 2, wobei das Obst oder die Fruchtzubereitung, bezogen auf das Gesamtgewicht der Zusammensetzung, in einer Menge zwischen 10 und 25 Gew.-% vorhanden ist.

4. Zusammensetzung nach einem der vorangehenden Ansprüche, wobei der Energiegehalt zwischen 1 und 2 kcal pro ml beträgt.

5. Zusammensetzung nach einem der vorangehenden Ansprüche, wobei die Zusammensetzung weiterhin Ballaststoffe umfasst.

6. Zusammensetzung nach einem der vorangehenden Ansprüche, umfassend zwischen 8-15 % Eiweiß, bezogen auf den Gesamtkaloriengehalt der Zusammensetzung, 30-50 % Fett, bezogen auf den Gesamtkaloriengehalt der Zusammensetzung, 35-65 % verdauliche Kohlenhydrate, bezogen auf den Gesamtkaloriengehalt der Zusammensetzung.

7. Zusammensetzung nach einem der vorangehenden Ansprüche, wobei das Eiweiß, bezogen auf den Gesamteiweißgehalt, zwischen 50-100 Gew.-% Molke umfasst.

8. Zusammensetzung nach einem der Ansprüche 1-6, wobei das Eiweiß freie Aminosäuren oder Glykomakropeptid oder ein Gemisch aus freien Aminosäuren und Glykomakropeptid umfasst.

9. Zusammensetzung nach Anspruch 8, wobei das Eiweiß, bezogen auf den Gesamteiweißgehalt, zwischen 90-100 Gew.-% freie Aminosäuren oder Glykomakropeptid oder ein Gemisch aus freien Aminosäuren und Glykomakropeptid umfasst.

10. Zusammensetzung nach einem der vorangehenden Ansprüche zur Verwendung bei der Behandlung einer Gedeihstörung bei Kindern.

11. Verwendung von Fett, Eiweiß, verdaulichen Kohlenhydraten und Obst oder einer Fruchtzubereitung zur Herstellung einer flüssigen Zusammensetzung (a) zur Verbesserung des Ernährungszustands eines diesbezüglich bedürftigen Kindes und/oder (b) zur diätetischen Behandlung einer Gedeihstörung bei einem Kind, wobei die flüssige Zusammensetzung einen Energiegehalt von wenigstens 0,9 kcal pro mlund einen pH-Wert zwischen 3,5 und 5 aufweist und wobei die Zusammensetzung kein Joghurt ist und wobei
a. der Eiweißgehalt, bezogen auf die Gesamtkalorien der Zusammensetzung, wenigstens 8 % beträgt,
b. der Fettgehalt, bezogen auf die Gesamtkalorien der Zusammensetzung, zwischen 25 und 50 % liegt,
c. der Kohlenhydratgehalt, bezogen auf die Gesamtkalorien der Zusammensetzung, zwischen 35 und 65 % liegt,
d. i) das Obst, bezogen auf das Gesamtgewicht der Zusammensetzung, in einer Menge von wenigstens 5 Gew.-% vorhanden ist oder ii) die Fruchtzubereitung, bezogen auf das Gesamtgewicht der Zusammensetzung, in einer Menge von wenigstens 0.5 Gew.-% vorhanden ist und als eine Zutat vor der Zugabe zu der flüssigen Zusammensetzung einen Brechungsindex zwischen 15 und 70 Grad Brix aufweist, gemessen bei 20°C unter Verwendung eines auf eine Brix-Skala kalibrierten Refraktometers.

12. Verfahren zur Herstellung einer flüssigen Zusammensetzung nach Anspruch 2, das folgende Schritte umfasst:
a. Zugeben der Kohlenhydrate und des Eiweißes zu Wasser
b. Emulgieren der unter a erhaltenen Zusammensetzung mit Fett
c. Zugeben einer Fruchtzubereitung mit einem Wert zwischen 15 und 70 Grad Brix und
d. Einstellen des pH-Werts auf einen Wert zwischen 3,5 und 5.

13. Zusammensetzung nach einem der Ansprüche 1-10 oder Verwendung nach Anspruch 11 oder 12, wobei der Eiweißgehalt, bezogen auf die Gesamtkalorien der Zusammensetzung, zwischen 8,5 und 12 % beträgt.

14. Zusammensetzung nach einem der Ansprüche 1-10 oder 13 oder Verwendung nach Anspruch 11 oder 12, wobei der Kohlenhydratgehalt, bezogen auf die Gesamtkalorien der Zusammensetzung, zwischen 45 und 55 % beträgt.

## Revendications

1. Composition liquide ayant une teneur en énergie d'au moins 0,9 kcal par ml, un pH entre 3,5 et 5, la composition étant constituée de matière grasse, de protéine, de carbohydrate digestibles et de fruit, dans laquelle
a. la teneur en protéine est d'au moins 8°% sur la base des calories totales de la composition,
b. la teneur en matière grasse est entre 25 et 50 % sur la base des calories totales de la composition,
c. la teneur en carbohydrate est entre 35 et 65 % sur la base des calories totales de la composition,
d. le fruit est présent selon une quantité d'au moins 5 % en poids sur la base du poids total de la composition,
et dans laquelle la composition n'est pas un yaourt.

2. Composition liquide ayant un contenu en énergie d'au moins 0,9 kcal par ml, un pH entre 3,5 et 5, la composition étant constituée d'une matière grasse, d'une protéine, de carbohydrate digestibles et d'une préparation de fruit, dans laquelle
a. la teneur en protéine est d'au moins 8°% sur la base des calories totales de la composition,
b. la teneur en matière grasse est entre 25 et 50 % sur la base des calories totales de la composition,
c. la teneur en carbohydrates digestible est entre 35 et 65 % sur la base des calories totales de la composition,
d. la préparation de fruit est présente selon une quantité d'au moins 5 % en poids sur la base du poids total de la composition, et a un indice de réfraction entre 15 et 70 degrés Brix, mesuré à 20°C en utilisant un réfractomètre calibré sur une échelle de Brix, comme ingrédient avant ajout à la composition liquide,
et dans laquelle la composition n'est pas un yaourt

3. Composition selon les revendications 1 ou 2, dans lequel le fruit, ou la préparation de fruit, est présent dans une quantité comprise entre 10 et 25 % en poids sur la base du poids total de la composition.

4. Composition selon l'une quelconque des revendications précédentes, dans laquelle la teneur en énergie est comprise entre 1 et 2 kcal par ml.

5. Composition selon l'une quelconque des revendications précédentes, dans laquelle la composition comprend en outre de la fibre alimentaire.

6. Composition selon l'une quelconque des revendications précédentes, comprenant de 8 à 15 % de protéine sur la base du contenu calorique total de la composition, 30 à 50 % de matière grasse sur la base du contenu calorique total de la composition, de 35 à 65 % de carbohydrate digestibles sur la base du contenu calorique total de la composition.

7. Composition selon l'une quelconque des revendications précédentes, dans laquelle la protéine comprend entre 50 à 100 % en poids de petit lait sur la base du contenu total en protéine.

8. Composition selon l'une quelconque des revendications 1 à 6, dans laquelle la protéine comprend des acides aminés libres, ou de glycomacropeptide, ou un mélange d'acides aminés libres et de glycomacropeptide.

9. Composition selon la revendication 8, dans laquelle la protéine comprend entre 90 à 100 % en poids d'acides aminés libres ou de glycomacropeptide, ou un mélange d'acides aminés libres et de glycomacropeptide, sur la base du contenu total en protéine.

10. Composition selon l'une quelconque des revendications précédentes, pour utilisation dans le traitement d'une croissance défaillante chez les enfants.

11. Utilisation de matière grasse, protéine, carbohydrate digestibles et de fruit ou d'une préparation de fruit pour la fabrication d'une composition liquide (a) pour améliorer l'état nutritionnel d'un enfant ayant besoin de ceux-ci et/ou (b) pour la gestion alimentaire d'une croissance défaillante chez un enfant, dans laquelle la composition a une teneur en énergie d'au moins 0,9 kcal par millilitres, un pH entre 3,5 et 5, et dans laquelle la composition n'est pas un yaourt, et dans laquelle
a. la teneur en protéine est d'au moins 8 % sur la base des calories totales de la composition,
b. la teneur en matière grasse est entre 25 et 50 % sur la base des calories totales de la composition,
c. la teneur en carbohydrate digestible est entre 35 et 65 % sur la base des calories totales de la composition,
d. i) le fruit est présent selon une quantité d'au moins 5 % en poids sur la base du poids total de la composition ou ii) la préparation de fruit est présente selon une quantité d'au moins 0,5 % en poids sur la base du poids total de la composition et a un indice de réfraction entre 15 et 70 degrés Brix, mesuré à 20°C en utilisant un réfractomètre calibré sur une échelle de Brix, comme ingrédient avant ajout à la composition liquide.

12. Méthode pour préparer une composition liquide selon la revendication 2 comprenant les étapes consistant à :
a. ajouter à de l'eau les carbohydrates et la protéine,
b. émulsifier la composition obtenue avec une matière grasse,
c. ajouter une préparation de fruit ayant une valeur comprise entre 15 et 70 degrés Brix, et
d. ajuster le pH à une valeur entre 3,5 et 5.

13. Composition selon l'une quelconque des revendications 1 à 10 ou utilisation selon les revendications 11 ou 12, dans laquelle la teneur en protéine est comprise entre 8,5 et 12 % sur la base des calories totales de la composition.

14. Composition selon l'une quelconque des revendications 1 à 10 ou 13, ou utilisation selon les revendications 11 ou 12, dans laquelle la teneur en carbohydrate est compris entre 45 et 50 % sur la base des calories totales de la composition.
